# EUROPÄISCHE PATENTANMELDUNG

(11) **EP 2 224 220 A1**
(43) Veröffentlichungstag der Anmeldung: **01.09.2010**
(21) Anmeldenummer: 10001821.7
(22) Anmeldetag: 23.02.2010
(51) Int. Cl.: G01G 19/44, G01G 23/00, G01G 3/14

(54) **Wiegemodul**

(30) Priorität: 26.02.2009 DE 102009010391
(71) Anmelder: Soehnle Professional GmbH & Co. KG, 71522 Backnang (DE)
(72) Erfinder: Gerster, Stephan, 53343 Wachtberg-Pech (DE)
(74) Vertreter: Hoffmann, Jürgen

(57) **Zusammenfassung**

Wiegemodul mit einem Messsensor, der elektrische Messsignale erzeugt. Das Wiegemodul ist mit einer Empfangsvorrichtung ausgerüstet, die induktiv und/oder kapazitiv Energie zum Betreiben des Messsensors empfängt. Bei einer vorteilhaften Ausführung ist das Wiegemodul Bestandteil einer Wiegevorrichtung, die außerdem eine Steuerungsvorrichtung mit einer Sendevorrichtung zum Senden der Energie zum berteiben des Wiegemoduls aufweist.

## Beschreibung

Die Erfindung betrifft ein Wiegemodul mit einem Messsensor, der Messsignale erzeugt.

Wiegevorrichtungen weisen im Allgemeinen einen mit elektrischem Strom betriebenen Messsensor auf, der mit einem elektrischen Kabel angeschlossen ist. Dies wirft insbesondere dann Probleme auf, wenn der Messsensor relativ zu übrigen Komponenten der Wiegevorrichtung beweglich angeordnet werden muss, weil die elektrische Zuleitung die Beweglichkeit einschränkt oder behindert. Dieses Problem tritt insbesondere auch beim Nachrüsten von bestehenden Gegenständen, wie beispielsweise einem Krankenbett, mit einer Wägeeinrichtung auf.

Es ist bekannt, Messsignale per Funk von einzelnen Wägemodulen an eine Auswerteeinheit zu übertragen, wobei die Wägemodule mit einer eigenen Energieversorgung, wie Batterien oder Akkus ausgerüstet sein müssen. Beispielsweise aus DE 10 2005 018 279 A1 ist eine Wägeeinrichtung zum Wiegen von auf Rädern ruhenden Lasten, insbesondere von Krankenbetten, bekannt, die aus vier einzelnen, jeweils unter ein Rad positionierbaren Modulen besteht, wobei die Module mit Akkus ausgerüstet sein können und die Messsignale per Funk an eine Auswerteeinheit übertragen werden. Diese Wägeeinrichtung hat den Nachteil, dass der Ladezustand der Akkus ständig überwacht werden muss und regelmäßig per elektrischer Leitung nachgeladen werden muss.

Es ist daher die Aufgabe der vorliegenden Erfindung ein Wiegemodul anzugeben, das weitgehend flexibel, insbesondere auch an beweglichen Elementen, einsetzbar ist.

Die Aufgabe wird durch ein Wiegemodul gelöst, das dadurch gekennzeichnet ist, dass das Wiegemodul eine Empfangsvorrichtung aufweist, die induktiv und/oder kapazitiv Energie zum Betreiben des Messsensors empfängt und/oder dass das Wiegemodul eine Empfangsvorrichtung aufweist, mit der induktiv und/oder kapazitiv Energie zum Betreiben des Messsensors empfangbar ist und/oder das Wiegemodul eine Empfangsvorrichtung aufweist, mit der kabellos Energie zum Betreiben des Messsensors empfangbar ist.

Das erfindungsgemäße Wiegemodul hat den besonderen Vorteil, dass es weitgehend unabhängig von den mechanischen Gegebenheiten des zu wiegenden Gegenstandes, beziehungsweise des Gegenstandes an dem das Wiegemodul angebracht werden soll, einsetzbar ist. Beispielsweise ist in vorteilhafter Weise das erfindungsgemäße Wiegemodul an einem beweglichen Fahrwerksbauteil einsetzbar. Bei einer besonderen Ausführungsform kann auch vorgesehen sein, dass das Wiegemodul selbst - zumindest teilweise - als Fahrwerksbauteil ausgebildet ist. In erfindungsgemäßer Weise wird die Beweglichkeit des Bauteils an dem das Wiegemodul angebracht ist, beziehungsweise die Beweglichkeit des Wiegemoduls gegenüber anderen Bauteilen, nicht durch elektrische Leitungen eingeschränkt. Insbesondere das kontinuierliche Verwiegen wird hierdurch in erfindungsgemäßer Weise besonders vereinfacht, da ein störendes Aufladen von Akkus oder ein Austauschen von Batterien - gegebenenfalls verbunden mit einer Unterbrechung des Wiegevorganges - vollständig vermieden ist.

Das erfindungsgemäße Wiegemodul kann in gleichermaßen vorteilhafter Weise bereits bei der Herstellung von Wiegevorrichtungen oder anderen Gegenständen, also als Erstausrüstungsbauteil, integriert sein oder auch als Nachrüstbauteil, beispielsweise zum nachträglichen Ausrüsten eines Krankenbettes zur - vorzugsweise fahrbaren - Krankenwiegestation, ausgebildet sein.

Das erfindungsgemäße Wiegemodul kann, je nach Anforderung, mit Messsensoren unterschiedlicher Art ausgerüstet sein. Beispielsweise kann vorgesehen sein, dass der Messsensor als Wägezelle ausgebildet ist. Es kann darüber hinaus auch vorgesehen sein, dass der Messsensor zumindest einen Dehnmessstreifen aufweist.

Bei einer besonderen Ausführungsform des erfindungsgemäßen Wiegemoduls ist vorgesehen, dass der Messsensor als Achslastsensor ausgebildet ist. Es kann alternativ oder zusätzlich vorgesehen sein, dass der Messsensor als Achse zur drehbaren Lagerungen eines Rades ausgebildet ist. Insbesondere kann auch vorgesehen sein, dass das Wiegemodul, zumindest teilweise, als Radaufhängung ausgeführt ist. Beispielsweise kann das Wiegemodul ein Halteelement, beispielsweise einen U-förmigen Haltebügel, aufweisen, an dem eine als Messsensor ausgebildete Achse zur drehbaren Lagerung eines Rades angeordnet ist.

Das Wiegemodul weist bei einer besonderen Ausführungsform - beispielsweise an einem Halteelement - eine mechanische Ankopplungsvorrichtung zur, beispielsweise beweglichen, insbesondere drehbaren oder rotierbaren, Lagerung des Wiegemoduls an anderen Bauteilen
- insbesondere innerhalb einer Wiegevorrichtung - auf. An dem mechanischen Ankopplungsmodul - jedoch alternativ oder zusätzlich auch an geeigneten anderen Stellen - kann in vorteilhafter Weise die Empfangsvorrichtung angeordnet sein, die induktiv und/oder kapazitiv die Energie zum Betreiben des Messsensors empfängt. Beispielsweise kann vorgesehen sein, dass die mechanische Ankopplungsvorrichtung als Haltedorn ausgebildet ist, um den herum eine die Empfangsvorrichtung bildende Spule angeordnet ist. Dieses Wiegemodul kann in vorteilhafter Weise in eine, beispielsweise am Bein eines Krankenbettes, vorgesehene mechanische Aufnahmevorrichtung - vorzugsweise drehbar oder rotierbar - eingesteckt werden, wobei an der Aufnahmevorrichtung, wie weiter unten noch genauer ausgeführt wird, eine Sendevorrichtung zum Senden der Energie zum Betreiben des Wiegemoduls angeordnet sein kann. Bei dieser Ausführungsform ist die Bewegbarkeit, insbesondere die Drehbar- oder Rotierbarkeit, des Wiegemoduls in keiner Weise eingeschränkt. Die Empfangsvorrichtung des Wiegemoduls kann, insbesondere zum induktiven Empfangen der Energie zum Betreiben des Messsensors eine oder mehrere Spulen aufweisen und/oder, insbesondere zum kapazitiven Empfangen der Energie zum Betreiben des Messsensors eine kapazitive Elektrode, beispielsweise ein flaches oder flächiges Metallelement, das auch aus einer aufgedampften Schicht bestehen könnte, aufweisen.

In besonders vorteilhafter Weise ist das erfindungsgemäße Wiegemodul innerhalb einer Wiegevorrichtung einsetzbar, beziehungsweise kann durch die Verwendung des erfindungsgemäßen Wiegemoduls ein zunächst nicht zum Wiegen vorgesehener Gegenstand, wie beispielsweise ein Krankenbett oder ein Rollstuhl, zur Wiegevorrichtung umgerüstet werden. In vorteilhafter Weise kann hierbei vorgesehen sein, dass die Wiegevorrichtung ein Steuerungsmodul aufweist, dass die Energie zum Betreiben des Wiegemoduls bereitstellt. Insbesondere kann vorgesehen sein, dass das Steuerungsmodul eine Sendevorrichtung zum Senden der Energie aufweist. Bei einer besonders flexibel einsetzbaren Ausführungsform ist vorgesehen, dass die Sendevorrichtung ein magnetisches Feld - beispielsweise mit einer elektrischen Spule - erzeugt, dem die Empfangsvorrichtung des Wiegemoduls die Energie zum betreiben des Messsensor nimmt. Es kann alternativ oder zusätzlich auch vorgesehen sein, dass die Sendevorrichtung ein elektrisches Feld erzeugt, dem die Empfangsvorrichtung die Energie zum Betreiben des Messsensor entnimmt.

In erfindungsgemäß vorteilhafter Weise können die Sendevorrichtung und die Empfangsvorrichtung im Abstand von einigen Millimetern oder je nach mechanischen Anforderungen im Abstand von einigen Zentimetern angeordnet sein. Hierdurch ist insbesondere eine zuverlässige und störungsunanfällige Funktion ebenso gewährleistet, wie eine sehr effiziente Energieübertragung. Die erforderlichen Felder können räumlich äußerst beschränkt bleiben, so dass eine Belastung der Umgebung durch die erzeugten Felder weitgehend vermieden ist. Falls es die mechanischen Anforderungen jedoch erfordern, kann der Abstand der Sendevorrichtung zur Empfangsvorrichtung auch größer gewählt werden.

Bei einer besonders zuverlässig arbeitenden Ausführungsform sind die Sendevorrichtung und die Empfangsvorrichtung als zumindest teilweise ineinander liegende Spulen ausgebildet. Es kann auch vorgesehen sein, dass die Sende- und Empfangsvorrichtung als übereinander oder nebeneinander angeordnete Spulen ausgebildet sind.

Die Wiegevorrichtung kann eine Wiegegutaufnahme aufweisen, die beispielsweise als Liegefläche, insbesondere als Krankenliegefläche oder als Stuhl, Insbesondere Krankenstuhl, ausgebildet sein kann. Die Wiegegutaufnahme kann in erfindungsgemäßer Weise äußerst vielseitig ausgeführt sein, wobei dem Anwendungsspektrum der Wiegevorrichtung prinzipiell keine Grenzen gesetzt sind. Beispielsweise kann die Wiegegutaufnahme auch die Lastgabel eines Gabeistaplers oder die Auflagefläche eines Transportbandes sein. Der Flexibilität hinsichtlich des Einsatzbereiches der erfindungsgemäßen Wiegevorrichtung, beziehungsweise der durch Nachrüstung mit dem Wiegemodul entstandenen Wiegevorrichtung, ist insbesondere deshalb kaum eine Grenze gesetzt, weil die Empfangsvorrichtung relativ zur Sendevorrichtung oder relativ zur Wiegegutaufnahme beweglich angeordnet sein kann. Insoweit ist die erfindungsgemäße Wiegevorrichtung nicht auf immobile Gegenstände beschränkt, sondern kann insbesondere auch fahrende oder fahrbare Gegenstände umfassen. Insbesondere kann vorgesehen sein, die Empfangsvorrichtung relativ zur Sendevorrichtung und/oder relativ zur Wiegegutaufnahme drehbar, insbesondere frei drehbar, und/oder rotierbar, insbesondere frei rotierbar, angeordnet ist. Bei einer besonderen Ausführungsform der erfindungsgemäßen Wiegevorrichtung bildet das Wiegemodul einen Standfuß und/oder ein Fahrwerk, beziehungsweise ein Fahrwerksbauteil, der Wiegevorrichtung.

Bei einer besonderen Ausführungsform ist vorgesehen, dass das Steuerungsmodul Messsignale des Wiegemoduls - vorzugsweise durch induktive und/oder kapazitive Übertragung - empfängt. Hierfür kann in vorteilhafter Weise vorgesehen sein, dass das Wiegemodul eine weitere Sendevorrichtung zum Übertragen von Messsignalen aufweist. Hierbei kann in besonders vorteilhafter Weise vorgesehen sein, dass die Empfangsvorrichtung - neben ihrer Funktion zur Energieübertragung - als weitere Sendevorrichtung zum Übertragen von Messsignalen fungiert. In analoger Weise kann vorgesehen sein, dass das Steuerungsmodul eine weitere Empfangsvorrichtung zum Übertragen von Messsignalen aufweist. Besonders vorteilhaft ist hierbei eine Ausführungsform bei der die Sendevorrichtung - neben ihrer Funktion zur Energieübertragung - als weitere Empfangsvorrichtung zum Übertragen von Messsignalen fungiert.

Insbesondere eine Ausführungsform, bei der sowohl die Übertragung der Energie als auch die Übertragung der Messsignale über die Empfangsvorrichtung und die Sendevorrichtung erfolgt, zeichnet sich durch eine äußerst geringe Anzahl von zusätzlichen Bauteilen auf. Sie ist daher äußerst kostengünstig herstellbar und darüber hinaus störungsunanfällig.

Bei einer besonderen Ausführungsform kann vorgesehen sein, dass das Steuerungssignal die Messsignale, die es empfängt, verarbeitet und beispielsweise an eine Anzeigevorrichtung zur Anzeige eines Gewichtswert weiterleitet. Darüber hinaus kann das Steuerungsmodul mit Speichereinrichtungen ausgerüstet sein, um die Messwerte - beispielsweise in Abhängigkeit von der Zeit - abzulegen, was unter anderem Langzeitauswertungen ermöglicht.

Wie bereits angedeutet, kann die Wiegevorrichtung In besonders vorteilhafter Weise als Bett, insbesondere als Krankenbett oder als Stuhl, insbesondere als Rollstuhl, ausgebildet sein. Es kann jedoch auch vorgesehen sein, ein bereits vorhandenes Bett mit einem erfindungsgemäßen Wiegemodul, beziehungsweise mit einer erfindungsgemäßen Wiegevorrichtung, nachzurüsten. Genauso wie es beispielsweise möglich ist, einen bereits vorhandenen Stuhl mit einem erfindungsgemäßen Wiegemodul oder mit einer erfindungsgemäßen Wiegevorrichtung nachzurüsten, wobei ein Gegenstand, wie beispielsweise ein Bett oder ein Stuhl, bei Verwendung eines als Fahrwerk ausgebildeten Wiegemoduls zusätzlich zur Umrüstung als Wiegevorrichtung als weiteren Vorteil eine Fahrbarkeit erhält.

In erfindungsgemäßer Weise kann auch vorgesehen sein, dass an einem Gegenstand bereits vorhandene Bauteile, beispielsweise Fahrwerksbauteile durch das erfindungsgemäße Wiegemodul, beziehungsweise die erfindungsgemäße Wiegevorrichtung, ersetzt werden oder dass durch Austausch der Bauteile gegen das erfindungsgemäße Wiegemodul eine erfindungsgemäße Wiegevorrichtung geschaffen wird.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1a: ein als Fahrwerksbauteil ausgebildetes erfindungsgemäßes Wiegemodul in der Seitansicht,
- Fig. 1b: das Wiegemodul in Frontansicht und
- Fig. 2: eine erfindungsgemäße Wiegevorrichtung, die als Krankenbett ausgebildet ist.

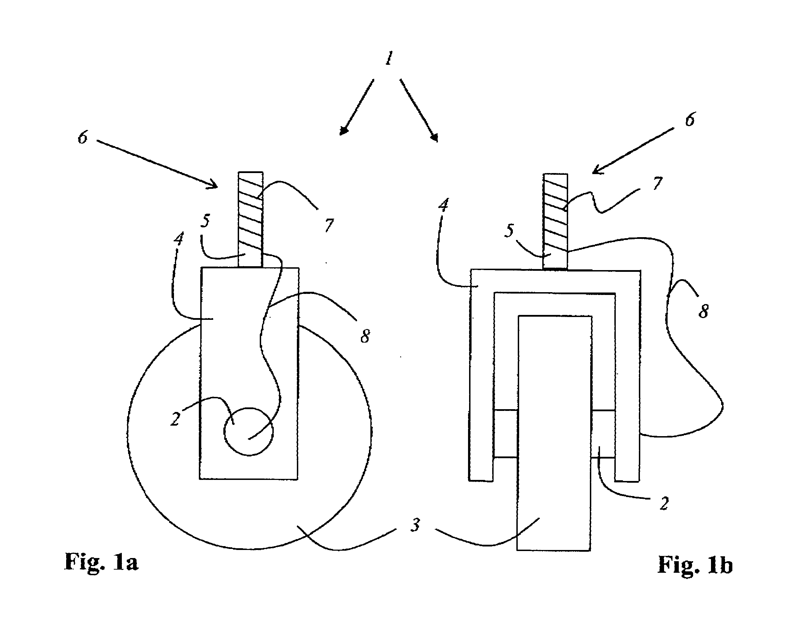

Figur 1 zeigt ein erfindungsgemäßes Wiegemodul 1, das als Fahrwerksbauteil ausgebildet ist. Das Wiegemodul 1 weist einen Messsensor 2 auf, der als Achslastsensor ausgebildet ist und der gleichzeitig als Achse zur drehbaren Lagerung eines Rades 3 dient. Der Messsensor 2 ist in einem U-förmigen Haltebügel 4 angeordnet, an dem ein Ankopplungselement 5, das im Wesentlichen zylinderförmig ausgebildet ist, befestigt ist. Das Ankopplungselement 5 ist mit einer Empfangsvorrichtung 6 ausgerüstet, die eine Spule 7 aufweist, deren Windungen um das Ankopplungselement 6 herum verlaufen. Die Empfangsvorrichtung empfängt induktiv Energie zum Betreiben des Messsensors 2 und überträgt diese an den Messsensor 2 mit Hilfe einer elektrischen Leitung 8.

Zusätzlich fungiert die Empfangsvorrichtung auch als weitere Sendevorrichtung, um Messsignale des Messsensors 3 an ein in dieser Figur nicht gezeigtes Steuerungsmodul zu übertragen.

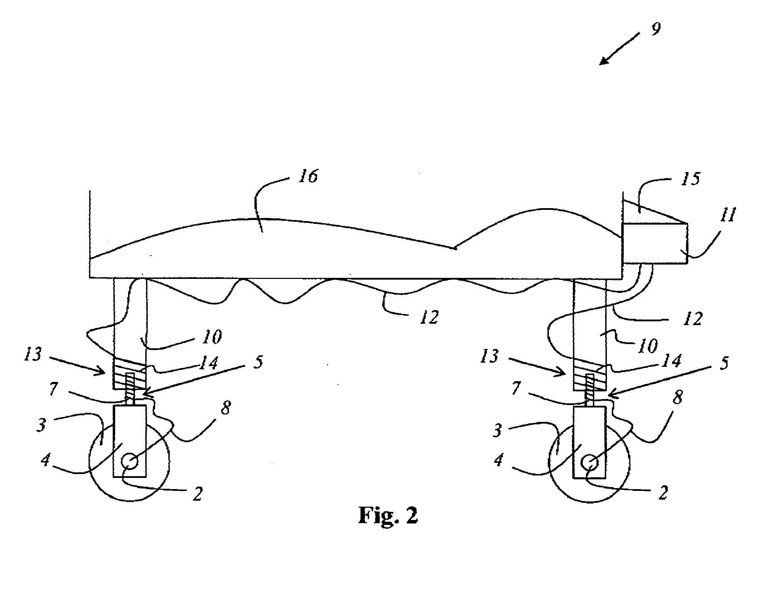

Figur 2 zeigt ein Krankenbett 9, dessen Standbeine 10 jeweils mit einem Wiegemodul 1 ausgerüstet sind, wie es in Figur 1 dargestellt ist. Die Standbeine 10 sind jeweils mit einer mechanischen Aufnahme am unteren Ende ausgerüstet, in die die Ankopplungsvorrichtung 6 derart einführbar ist, dass die als Fahrwerksbauteile ausgeführten Wiegemodule um die Längsmittelachse der Standbeine frei drehbar und rotierbar sind. Die als Krankenbett ausgebildete Wiegevorrichtung weist ein Steuerungsmodul 11 auf, das über elektrische Leitungen 12 jeweils mit einer an jedem Standbein angeordneten Sendevorrichtung 13, die jeweils als weitere Spule 14 ausgebildet sind, elektrisch verbunden ist. Die Windungen der weiteren Spule 14 verlaufen um die Standbeine herum, so dass die Spule 7 und die weitere Spule 14 ineinander angeordnet sind, was eine effiziente und störungsunanfälllge Energieübertragung von dem Steuerungsmodul 11 auf die Wiegemodule 1 gewährleistet. Die Empfangsvorrichtungen 5 sind, wie bereits erläutert, gleichzeitig als weitere Sendevorrichtungen ausgebildet, während die Sendevorrichtungen 13 gleichzeitig und zusätzlich als weitere Empfangsvorrichtungen ausgebildet sind. Hierdurch wird erreicht, dass die von vom Messsensor 2 erzeugten Messsignale auf dem selben Weg wie die Energie zum Betreiben des Messsensors, jedoch in umgekehrter Richtung, an das Steuerungsmodul 11 übertragen werden können. Das Steuerungsmodul 11 wertet die Messsignale aus und hält Gewichtswerte auf einer Anzeigenvorrichtung 15 dem Benutzer dar. Die Wiegegutaufnahme der als Krankenbett 9 ausgebildeten Wiegevorrichtung weist eine Liegefläche 16 auf.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Wiegemodul
- 2: Messsensor
- 3: Rad
- 4: Haltebügel
- 5: Mechanische Ankoppelvorrichtung
- 6: Empfangsvorrichtung
- 7: Spule
- 8: Elektrische Leitung
- 9: Krankenbett
- 10: Standbeine
- 11: Steuerungsvorrichtung
- 12: Weitere elektrische Leitung
- 13: Sendevorrichtungen
- 14: Weitere Spulen
- 15: Anzeigevorrichtung
- 16: Liegefläche

## Patentansprüche

1. Wiegemodul mit einem Messsensor, der Messsignale erzeugt, **dadurch gekennzeichnet, dass** das Wiegemodul eine Empfangsvorrichtung aufweist, die induktiv und/oder kapazitiv Energie zum Betreiben des Messsensors empfängt und/oder dass das Wiegemodul eine Empfangsvorrichtung aufweist mit der induktiv und/oder kapazitiv Energie zum Betreiben des Messsensors empfangbar ist und/oder das Wiegemodul eine Empfangsvorrichtung aufweist, mit der kabellos Energie zum Betreiben des Messsensors empfangbar ist.

2. Wiegemodul nach Anspruch 1, **dadurch gekennzeichnet, dass** die Empfangsvorrichtung eine Spule und/oder als kapazitive Elektrode, beispielsweise ein flaches Metallelement, aufweist.

3. Wiegemodul nach einem der Ansprüche 1 oder 2, **dadurch gekennzeichnet, dass** das Messsensor als Wägezelle ausgebildet ist und/oder dass der Messsensor zumindest einen Dehnmessstreifen aufweist.

4. Wiegemodul nach einem der Ansprüche 1 bis 3, **dadurch gekennzeichnet, dass** der Messsensor als Achslastsensor ausgebildet ist und/oder dass der Messsensor als Achse zur drehbaren Lagerung eines Rades ausgebildet ist.

5. Wiegemodul nach einem der Ansprüche 1 bis 4, **dadurch gekennzeichnet, dass** das Wiegemodul zumindest teilweise als Radaufhängung ausgebildet ist.

6. Wiegevorrichtung mit einem Wiegemodul nach einem der Ansprüche 1 bis 5 und mit einem Steuerungsmodul, das Energie zum Betreiben des Wiegemoduls bereitstellt.

7. Wiegevorrichtung nach Anspruch 6, **dadurch gekennzeichnet, dass** das Steuerungsmodul eine Sendevorrichtung zum Senden der Energie zum berteiben des Wiegemoduls aufweist.

8. Wiegevorrichtung nach Anspruch 7, **dadurch gekennzeichnet, dass** die Sendevorrichtung ein magnetisches Feld erzeugt, dem die Empfangsvorrichtung die Energie zum Betreiben des Messsensors entnimmt und/oder dass die Sendevorrichtung ein elektrisches Feld erzeugt, dem die Empfangsvorrichtung die Energie zum Betreiben des Messsensors entnimmt.

9. Wiegevorrichtung nach einem der Ansprüche 7 oder 8, **dadurch gekennzeichnet, dass** die Sendevorrichtung und die Empfangsvorrichtung als zumindest teilweise ineinander angeordnete Spulen ausgebildet sind.

10. Wiegevorrichtung nach einem der Ansprüche 6 bis 9, **dadurch gekennzeichnet, dass** die Wiegevorrichtung eine Wiegegutaufnahme aufweist, wobei die Wiegegutaufnahme als Liegefläche, insbesondere als Krankenliegefläche, oder als Stuhl, insbesondere als Krankenstuhl, ausgebildet ist.

11. Wiegevorrichtung nach einem der Ansprüche 6 bis 10, **dadurch gekennzeichnet, dass** die Empfangsvorrichtung relativ zur Sendevorrichtung und/oder relativ zur Wiegegutaufnahme beweglich angeordnet ist und/oder dass die Empfangsvorrichtung relativ zur Sendevorrichtung und/oder relativ zur Wiegegutaufnahme drehbar, insbesondere frei drehbar, angeordnet ist und/oder dass die Empfangsvorrichtung relativ zur Sendevorrichtung und/oder relativ zur Wiegegutaufnahme rotierbar, insbesondere frei rotierbar, angeordnet ist.

12. Wiegevorrichtung nach einem der Ansprüche 1 bis 11, **dadurch gekennzeichnet, dass** das Steuerungsmodul Messsignale des Wiegemoduls empfängt und/oder dass das Steuerungsmodul Messsignale des Wiegemoduls durch induktive und/oder kapazitive Übertragung empfängt.

13. Wiegevorrichtung nach Anspruch 12, **dadurch gekennzeichnet, dass** das Wiegemodul eine weitere Sendevorrichtung zum Übertragen von Messsignalen aufweist und/oder dass die Empfangsvorrichtung als weitere Sendevorrichtung zum Übertragen von Messsignalen fungiert.

14. Wiegevorrichtung nach einem der Ansprüche 12 oder 13, **dadurch gekennzeichnet, dass** das Steuerungsmodul eine weitere Empfangsvorrichtung zum Übertragen von Messsignalen aufweist und/oder dass die Sendevorrichtung als weitere Empfangsvorrichtung zum Übertragen von Messslgnalen fungiert.

15. Bett, insbesondere Krankenbett, oder Stuhl, insbesondere Krankenstuhl, mit einem Wiegemodul nach einem der Ansprüche 1 bis 5 und/oder mit einer Wiegevorrichtung nach einem der Ansprüche 6 bis 14.
